**Europäisches Patentamt**

**European Patent Office**

**Office européen des brevets**

(19)

(11) Veröffentlichungsnummer : **0 372 219 B1**

(12)
# EUROPÄISCHE PATENTSCHRIFT

(45) Veröffentlichungstag der Patentschrift :
**30.12.92 Patentblatt 92/53**

(51) Int. Cl.⁵ : **B60T 13/74, F16D 65/34,**
**F16D 65/30**

(21) Anmeldenummer : **89120162.6**

(22) Anmeldetag : **31.10.89**

(54) **Radbremse für Fahrzeuge.**

(30) Priorität : **02.12.88 DE 3840685**

(43) Veröffentlichungstag der Anmeldung :
**13.06.90 Patentblatt 90/24**

(45) Bekanntmachung des Hinweises auf die
Patenterteilung :
**30.12.92 Patentblatt 92/53**

(84) Benannte Vertragsstaaten :
**DE FR IT SE**

(56) Entgegenhaltungen :
**DE-A- 1 655 097**
**DE-B- 2 710 585**
**GB-A- 2 156 021**

(73) Patentinhaber : **ROBERT BOSCH GMBH**
**Postfach 30 02 20**
**W-7000 Stuttgart 30 (DE)**

(72) Erfinder : **Steinke, Leo, Dipl.-Ing.**
**Haldenäcker 39**
**W-7050 Waiblingen-Hegnach (DE)**

EP 0 372 219 B1

Jouve, 18, rue Saint-Denis, 75001 PARIS

## Beschreibung

### Stand der Technik

Die Erfindung betrifft eine Radbremse für Fahrzeuge, insbesondere für Kraftfahrzeuge, der im Oberbegriff des Anspruchs 1 definierten Gattung.

Bei Bremsanlagen für Fahrzeuge, insbesondere für Kraftfahrzeuge, wird vorwiegend Druckluft oder unter Druck stehendes Hydrauliköl als Energiemittel eingesetzt. Für die Bereitstellung und die Absicherung dieser Energie ist ein erheblicher technischer Aufwand erforderlich. Man hat daher schon Überlegungen angestellt, Radbremsen direkt elektromotorisch anzutreiben.

Bei einer bekannten elektromotorisch betätigten Radbremse der eingangs genannten Art (DE 34 10 006 A1) ist ein Kolben in einem Zylindergehäuse axial verschieblich geführt und trägt auf seiner Stirnseite eine Bremsbacke, die unter Belassung eines Luftspaltes einer Bremsscheibe gegenübersteht. Die Einhaltung dieses minimalen Luftspaltes bei gelöster Bremse ist für das einwandfreie Abheben der Bremsbacke von der Bremsscheibe erforderlich. Zum Antrieb des Kolbens dient ein Elektromotor, vorzugsweise ein Gleichstrommotor, der in beiden Drehrichtungen drehen kann. Die Abtriebswelle des Elektromotors steht über ein Kugelumlaufgetriebe mit dem Kolben in Verbindung. Beim Drehen des Elektromotors wird über das Kugelumlaufgetriebe die Drehbewegung der Abtriebswelle in eine axiale Verschiebebewegung des Kolbens umgesetzt. Nach Zurücklegen eines dem Lüftweg entsprechenden Verschiebewegs der Bremsbacke legt sich diese mit ihrem Bremsbelag an die Bremsscheibe an und wird bei der weiteren Verschiebebewegung des Kolbens, während derer die Bremsbacke ihren sog. Spannweg zurücklegt, an die Bremsscheibe angepreßt (Zuspannung). Zum Lösen der Bremse läuft der Elektromotor in inverser Drehrichtung, die Anpreßkraft der Backenbremse wird verringert, und schließlich hebt die Bremsbacke von der Bremsscheibe ab. Ist das vorgegebene Lüftspiel zwischen Bremsbacke und Bremsscheibe erreicht, wird der Elektromotor stillgesetzt.

Zur ordnungsgemäßen Funktion der Bremse darf der Luftspalt einen bestimmten minimalen Wert nicht unterschreiten und einen bestimmten maximalen Wert nicht überschreiten. Mit zunehmendem Verschleiß des Bremsbelages wird aber der Luftspalt größer, weshalb zum Ausgleich des Bremsbelagverschleißes eine selbsttätige Luftspalt-Nachstellung durch elektronische Steuerung der Rückstellung des Kolbens nach Lösen der Bremse erfolgt. Eine solche Nachstellung ist technisch sehr aufwendig. Außerdem ist es trotz dieser Luftspalt-Nachstellung nicht möglich, die gesetzlich vorgeschriebenen Zeiten bei Bremsbetätigung mit technisch vertretbarem Aufwand einzuhalten.

### Vorteile der Erfindung

Die erfindungsgemäße Radbremse hat demgegenüber den Vorteil, daß durch die unterschiedlichen Untersetzungsverhältnisse für den Lüftweg einerseits, d.h. zur Überwindung des Luftspaltes bis zum Augenblick des Anlegens des Bremsbelages an die Bremsscheibe oder -trommel, und für den Spannweg andererseits, d.h. vom Augenblick des Anlegens des Bremsbelags an die Bremsscheibe oder -trommel an bis zum Festbremsen des Rades, die geforderten Bremsbetätigungszeiten ohne Schwierigkeiten erreicht werden können. Da die Kräfte bei der Überwindung des Lüftspiels klein sind, kann mit dem kleinen Untersetzungsverhältnis in diesem Bereich eine hohe Zustellgeschwindigkeit und damit eine kurze Zustellzeit erreicht werden. Im Bereich des Spannweges sind große Kräfte bei kleinen Wegen oder Winkeln erforderlich, die sich vorteilhaft durch das große Untersetzungsverhältnis realisieren lassen. Damit lassen sich bei der erfindungsgemäßen Radbremse mit kleiner Motorleistung die gesetzlich geforderten Bremsenansprechzeiten sehr gut erfüllen. Außerdem kann die Radbremse bei entsprechender Auslegung des Getriebes auch zugleich als Feststellbremse benutzt werden. Die Radbremse läßt sich darüber hinaus so auslegen, daß nach stromproportionaler Einsteuerung die erreichte Zuspannung stromlos gehalten wird. ABS- (Antiblockierschutz) und ASR-(Antischlupfregelung) Funktionen sind bei der erfindungsgemäßen Radbremse einfacher, d.h. mit geringerem Zusatzaufwand, zu realisieren, da die Wandlung elektrischer in mechanische Energie bereits vorhanden ist. Bei der erfindungsgemäßen Radbremse sind Nocken-, Spreizhebel- und auch Keilzuspannung der Bremsbacken möglich. Bei Nockenzuspannung ist es vorteilhaft, die Nockenform an die elektromotorische Zuspannung anzupassen. Bei großem Zuspannwinkel des Nockens kann der Verschleiß des Bremsbelags über einen Drehwinkelgeber genauer erfaßt werden. Damit ist neben Selbstjustierung auch eine sichere Verschleißüberwachung möglich, aus welcher eine Aufforderungsanzeige zum Aufsuchen einer Werkstatt abgeleitet werden kann. Ein größerer Zuspannwinkel ergibt dazu kleinere Drehmonente und damit leichtere Getriebebauteile.

Durch die in den weiteren Ansprüchen aufgeführten Maßnahmen sind vorteilhafte Weiterbildungen und Verbesserungen der im Anspruch 1 angegebenen Radbremse möglich.

Die Umschaltung des Untersetzungsverhälnisses im Getriebe (Getriebeumschaltung) kann in Abhängigkeit von der Drehzahl der Abtriebswelle des Elektromotors sowohl mechanisch als auch elektromechanisch durchgeführt werden. Hierzu eignen sich Fliehkraftkupplungen oder auch elektrische Schaltkupplungen, denen ein drehzahl- und/oder drehmomentabhängiges Schaltsignal zugeführt wird. Letzteres kann aus dem Ankerstrom und der Ankerspannung des Elektromotors abgeleitet werden.

Vorteilhaft wird ein mehrstufiges Getriebe verwendet und zum Umschalten des Untersetzungsverhältnisses eine Getriebestufe überbrückt, d.h. ihr Übersetzungsverhältnis 1:1 gemacht. Die Umschaltung erfolgt vorzugsweise in einer Getriebestufe mit niedrigem Drehmoment, um eine geringe mechanische Beanspruchung und kleine Übergangszeiten zu erhalten. Bevorzugt wird daher die dem Elektromotor unmittelbar folgende Getriebestufe umgeschaltet.

Wird eine Getriebestufe als Schneckenradstufe ausgebildet, so erhält das Getriebe eine Selbsthemmung, wodurch eine eingestellte Zuspannung gehalten wird. Die erfindungsgemäße Radbremse kann damit als Feststellbremse wirken.

Der Elektromotor wird vorteilhaft als permanentmagneterregter Gleichstrommotor ausgebildet, der im Brückenzweig einer gesteuerten Halbleiterbrücke angeordnet ist. Wegen der erforderlichen Drehrichtungsumkehr des Elektromotors muß die Leistungselektronik zum Ansteuern des Elektromotors für 4-Quadrantenbetrieb ausgelegt werden. Die Steuerung der Transistoren erfolgt über einen Gleichstromsteller. Bei Verwendung eines Splitfeldmotors wird die Leistungselektronik einfacher, der Motor allerdings etwas aufwendiger.

Bremsanlagen, die mit solchen elektromotorisch betätigten Radbremsen ausgerüstet sind, müssen aufgrund gesetzlicher Sicherheitsvorschriften zweikreisig ausgeführt werden. Neben der Zweikreisigkeit der Betriebsbremsgeber muß auch eine Redundanz in der Stromversorgung vorgesehen werden, was durch zwei Stromversorgungsquellen (Batterien) realisiert wird. Die zweite Batterie ist zweckmäßigerweise durch ein Relais mit dem Fahrzeuggenerator verbunden, wobei die Ansteuerung des Relais über den Anschluß D+ (Generator arbeitet) und eine Schaltschwelle, die temperaturkompensiert über der Leerlaufspannung der beiden Batterien liegt, erfolgt. Der Anschluß der zweiten Batterie erfolgt dann nur, wenn die Generatorspannung höher ist als die temperaturkompensierte Leerlaufspannung der Batterien. Anhänger mit elektromotorisch zugespannten Radbremsen sollen eine eigene Stromversorgungsquelle (Batterie) erhalten, die ebenfalls über einen Schaltkontakt eines Relais mit dem Fahrzeuggenerator verbunden wird.

Zeichnung

Die Erfindung ist anhand von in der Zeichnung dargestellten Ausführungsbeispielen in der nachfolgenden Beschreibung näher erläutert. Es zeigen jeweils in schematischer Darstellung:
Fig. 1 eine elektromotorisch betätigte Radbremse mit dreistufigem Getriebe und Elektromotor,
Fig. 2 eine Getriebestufe des dreistufigen Getriebes in Fig. 1 in perspektivischer Darstellung,
Fig. 3 die erste Getriebestufe des dreistufigen Getriebes in Fig. 1 gemäß einem weiteren Ausführungsbeispiel,
Fig. 4 einen elektrischen Schaltplan für die Ansteuerung des Elektromotors in Fig. 1,
Fig. 5 einen elektrischen Schaltplan einer zweikreisigen Bremsanlage für ein Kraftfahrzeug mit Anhänger.

Beschreibung der Ausführungsbeispiele

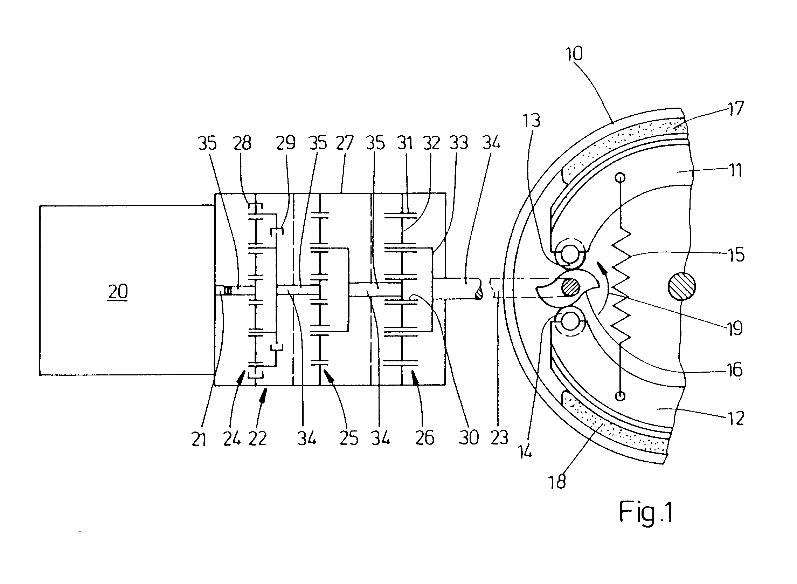

Die in Fig. 1 dargestellte Radbremse für eine Bremsanlage eines Kraftfahrzeuges, z.B. Personenkraftwagens, weist in bekannter Weise eine mit einem Fahrzeugrad drehfest verbundene Bremstrommel 10 auf, innerhalb welcher zwei Bremsbacken 11 und 12 schwenkbar angeordnet sind. Die Bremsbacken 11,12 liegen über jeweils ein Gleitstück 13,14 unter der Wirkung einer Rückstellfeder 15 an einem drehbar gelagerten Nocken 16 an. Auf jedem Bremsbacken 11,12 ist ein Bremsbelag 17 bzw. 18 befestigt.

Bei gelöster, d.h. unbetätigter Bremse besteht zwischen jedem Bremsbelag 17,18 und der Bremstrommel 10 ein Luftspalt mit vorgegebener kleiner Luftspaltbreite. Dieses minimale Lüftspiel ist für das einwandfreie Abheben der Bremsbacken 11,12 von der Bremstrommel 10 erforderlich. Wird der Nocken 16 in Fig. 1 entgegen Uhrzeigersinn (Pfeil 19) gedreht, so werden die beiden Bremsbacken 11,12 entgegen der Wirkung der Rückstellfeder 15 auseinandergespreizt und legen sich nach dem sog. Lüftweg zur Überwindung des Luftspaltes mit dem Bremsbelag 17 bzw. 18 an die Bremstrommel 10 an. Wird der Nocken 16 weitergedreht, so werden die Bremsbeläge 17,18 an die Bremstrommel 10 mit zunehmender Anpreßkraft angepreßt, und das Rad wird je nach Größe der Nockenverdrehung und damit der Anpreßkraft bis zum Stillstand abgebremst. Bei dieser Drehbewegung des Nockens 16 zur Zuspannung der Bremse werden die Bremsbacken 11,12 um den sog. Spannweg gegen die Bremstrommel 10 verschwenkt. Dreht der Nocken 19 im Uhrzeigersinn, so werden die Bremsbacken 11,12 freigegeben, und diese haben infolge der Rückstellfeder 15 wieder von der Bremstrommel 10 ab. Die Bremse ist wieder gelöst.

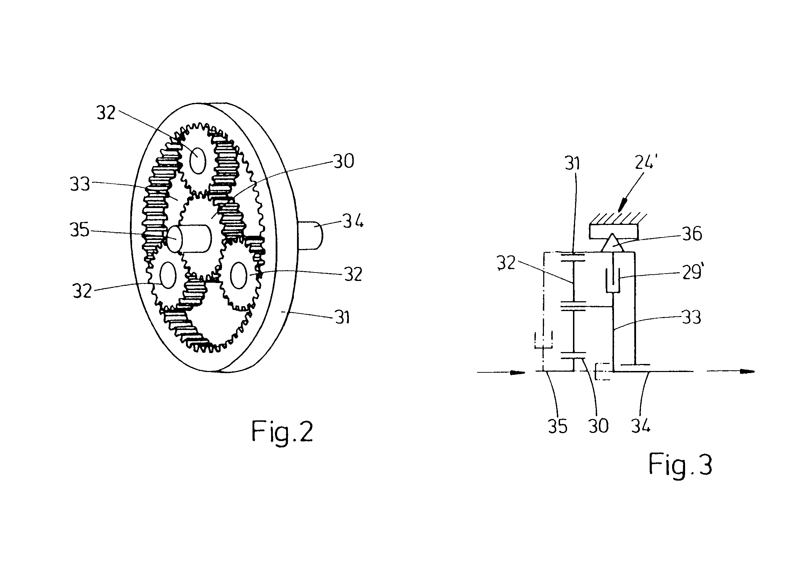

Zur Drehung des Nockens 16 ist ein mit 20 angedeuteter permanentmagneterregter Gleichstrommotor 20 vorgesehen, dessen Abtriebswelle 21 über ein dreistufiges Getriebe 22 mit einer Nockenwelle 23 verbunden ist, die ihrerseits den Nocken 16 mittel- oder unmittelbar antreibt. Die drei Getriebestufen 24,25 und 26 sind in einem Getriebegehäuse 27 untergebracht. Jede Getriebestufe 24 - 26 ist als Planetengetriebe ausgebildet. Ein Beispiel einer Getriebestufe eines Planetengetriebes ist in Fig. 2 perspektivisch dargestellt. Es weist in bekannter Weise ein Sonnenrad 30 mit Außenverzahnung, ein Hohlrad 31 mit Innenverzahnung und drei Planetenräder 32 mit Außenverzahnung auf, die einerseits mit der Außenverzahnung des Sonnenrads 30 und andererseits mit der Innenverzahnung des Hohlrads 31 kämmen. Die Planetenräder 32 sind auf einem gemeinsamen Steg 33 um gleiche Winkel versetzt angeordnet, der drehfest mit einer Ausgangswelle 34 des Planetengetriebes verbunden ist. Das Sonnenrad 30 sitzt drehfest auf einer Eingangswelle 35 des Planetengetriebes, die mit der Ausgangswelle 34 fluchtet. Wird das Hohlrad 31 am Getriebegehäuse 37 fixiert, so erfolgt eine Untersetzung der Drehbewegung der Eingangswelle 35 ins Langsame. Kann das Hohlrad 31 hingegen im Getriebegehäuse 27 frei laufen und ist der Steg 33 drehfest mit dem Hohlrad 31 verbunden, so hat das Planetengetriebe eine Übersetzung 1:1.

Wie in Fig. 1 schematisch dargestellt ist, ist die Eingangswelle 35 der ersten Getriebestufe 24 mit der Abtriebswelle 21 des Gleichstrommotors 20 und die Ausgangswelle 34 der dritten Getriebestufe 26 mit der Nockenwelle 23 jeweils drehfest verbunden. Weiterhin sind Ausgangswelle 34 der ersten Getriebestufe 24 und Eingangswelle 35 der zweiten Getriebestufe 25 sowie Ausgangswelle 34 der zweiten Getriebestufe 25 und Eingangswelle 35 der dritten Getriebestufe 26 drehfest miteinander gekoppelt. In der zweiten und dritten Getriebestufe 25,26 sind die Hohlräder 31 fest mit dem Getriebegehäuse 27 verbunden, so daß sie an einer Drehbewegung gehindert sind. In der ersten Getriebestufe 24 ist das Hohlrad 31 drehbeweglich im Getriebegehäuse 27 gelagert. Eine erste elektrische Schaltkupplung 28 vermag wahlweise das Hohlrad 31 drehfest mit dem Getriebegehäuse 27 zu verbinden oder dieses zur freien Drehbewegung freizugeben. Mittels einer zweiten elektrischen Schaltkupplung 29 kann eine drehfeste Verbindung zwischen dem Steg 33 der Planetenräder 32 und dem Hohlrad 31 hergestellt oder wieder aufgehoben werden. Diese zweite Schaltkupplung 29 kann auch zwischen dem Sonnenrad 30 einerseits und dem Steg 33 oder dem Hohlrad 31 andererseits angeordnet sein. Die beiden elektrischen Schaltkupplungen 28,29 werden derart angesteuert, daß immer eine Schaltkupplung geschlossen und die andere Schaltkupplung geöffnet ist. Ist die erste Schaltkupplung 28 geschlossen und die zweite Schaltkupplung geöffnet, so tritt in der ersten Getriebestufe 24 eine Untersetzung auf. Das gesamte Getriebe 22 hat aufgrund seiner Getriebestufen 24 - 26 ein großes Untersetzungsverhältnis, so daß die Rotation der Abtriebswelle 21, z.B. 3000 U/min in eine langsame Umdrehung der Nockenwelle 23, z.B. 3 U/min, untersetzt ist. Ist hingegen die erste Schaltkupplung 28 geöffnet und die zweite Schaltkupplung 29 geschlossen, so ist die erste Getriebestufe 24 überbrückt, d.h. das Übersetzungsverhältnis zwischen Eingangswelle 35 und Ausgangswelle 34 beträgt 1:1. Das Untersetzungsverhältnis des Getriebes 22 wird damit kleiner, so daß die Nockenwelle 23 bei gleicher Drehzahl der Abtriebswelle 21 des Gleichstrommotors 20 mit höherer Drehzahl, z.B. 15 U/min, dreht.

Die Ansteuerung der beiden Schaltkupplungen 28,29 ist nunmehr so getroffen, daß bei Bremsbetätigung und dem damit verbundenen Einschalten des Gleichstrommotors 20 zunächst die erste Schaltkupplung 28 geöffnet und die zweite Schaltkupplung 29 geschlossen wird. Damit ist die erste Getriebestufe 24 überbrückt, und die Nockenwelle 23 wird mit kleinem Untersetzungsverhältnis vom Gleichstrommotor 20 angetrieben. Mit der Nockenwelle 23 dreht der Nocken 16 und verschwenkt die Bremsbacken 11,12. Die genannte Ansteuerung der Schaltkupplungen 28,29 wird solange beibehalten, bis die Bremsbacken 11,12 den Lüftweg durchschritten haben und die Bremsbeläge 17,18 sich an die Bremstrommel 10 anlegen. Das kleine Untersetzungsverhältnis im Getriebe 22 und die damit einhergehende große Antriebsgeschwindigkeit der Nockenwelle 23 sorgt für eine schnelle Überwindung des Lüftspiels und damit für eine kurze Zustellzeit der Bremse. Sobald die Bremsbeläge 17,18 der Bremsbacken 11,12 an der Bremstrommel 10 anliegen, wird die Ansteuerung der Schaltkupplungen 28,29 so geändert, daß die zweite Schaltkupplung 29 öffnet und die erste Kupplung 28 schließt. Damit erhält die erste Getriebestufe 24 ihr normales Untersetzungsverhältnis, und das Getriebe 22 hat insgesamt ein wesentlich größeres Untersetzungsverhältnis. Bei unveränderter Drehzahl des Gleichstrommotors 20 wird nunmehr die Nockenwelle 23 und damit der Nocken 16 mit wesentlich niedrigerer Drehzahl angetrieben, wodurch während der Zuspannung der Bremsbacken 11,12 mit der gleichen Motorleistung sehr hohe Kräfte auf die Bremsbacken 11,12 übertragen werden können. Der Zeitpunkt des Anlegens der Bremsbeläge 17,18 an die Bremstrommel 10 und damit der Zeitpunkt der Umschaltung der Schaltkupplungen 28,29 kann über die Erfassung der Drehzahl oder des Drehmoments an der Abtriebwelle 21 des Gleichstrommotors 20 oder an der Nockenwelle 23 bestimmt werden. Diese Meßgrößen lassen sich wiederum aus den elektrischen Größen (Strom, Spannung) des Gleichstrommotors 20 gewinnen.

In Fig. 3 ist eine modifizierte Ausführung der ersten Getriebestufe 24' dargestellt. Hier ist die erste Schaltkupplung 28 in Fig. 1 ersetzt durch einen Freilauf 36 des Hohlrads 31 im Getriebegehäuse 27, der eine Drehung des Hohlrads 31 in die eine Drehrichtung zuläßt und die inverse Drehrichtung verhindert. Solange die zweite Schaltkupplung 29' geschlossen ist, beträgt das Übersetzungsverhältnis der Getriebestufe 24' 1:1. Bei einem vorgegebenen Antriebsmoment oder unterhalb einer festgelegten Antriebsdrehzahl öffnet die zweite Schaltkupplung 29'. Da durch den Freilauf 36 ein Rückwärtsdrehen des Hohlrades 31 verhindert wird und dieses somit am Getriebegehäuse 27 fixiert ist, wird die Untersetzung der Getriebestufe 24' eingeschaltet. Die zweite Schaltkupplung 29' kann bei gleicher Wirkung auch zwischen dem Sonnenrad 30 einerseits und dem Steg 33 oder dem Hohlrad 31 andererseits angeordnet sein. Dies ist in Fig. 3 strichliniert bzw. strichpunktiert eingezeichnet.

Zum Lösen der Bremse wird der Gleichstrommotor 20 so umgeschaltet, daß er in inverse Drehrichtung umläuft. Dadurch wird über das Getriebe 22 mit großem Untersetzungsverhältnis zunächst die Nockenwelle 23 und damit der Nocken 16 in entgegengesetzte Drehrichtung (entgegen Pfeil 19 in Fig. 1) angetrieben und die Zuspannung der Bremsbacken 11,12 an der Bremstrommel 10 aufgehoben. Liegen die Bremsbeläge 17,18 der Bremsbacken 11,12 ohne Anpreßkraft an der Bremstrommel 10 an, so erfolgt die umgekehrte Umschaltung der Schaltkupplungen 28,29 in Fig. 1. Damit wird das Untersetzungsverhältnis verkleinert und der Nocken 16 mit hoher Geschwindigkeit angetrieben, so daß das erforderliche Lüftspiel zum Abheben der Bremsbacken 11,12 von der Bremstrommel 10 sehr schnell hergestellt wird. Die Änderung des Untersetzungsverhältnisses beim Umschalten der Kupplungen 28,29 (Fig. 1) bzw. beim Öffnen bzw. Schließen der Kupplung 29' (Fig. 2) beträgt ungefähr 1:5.

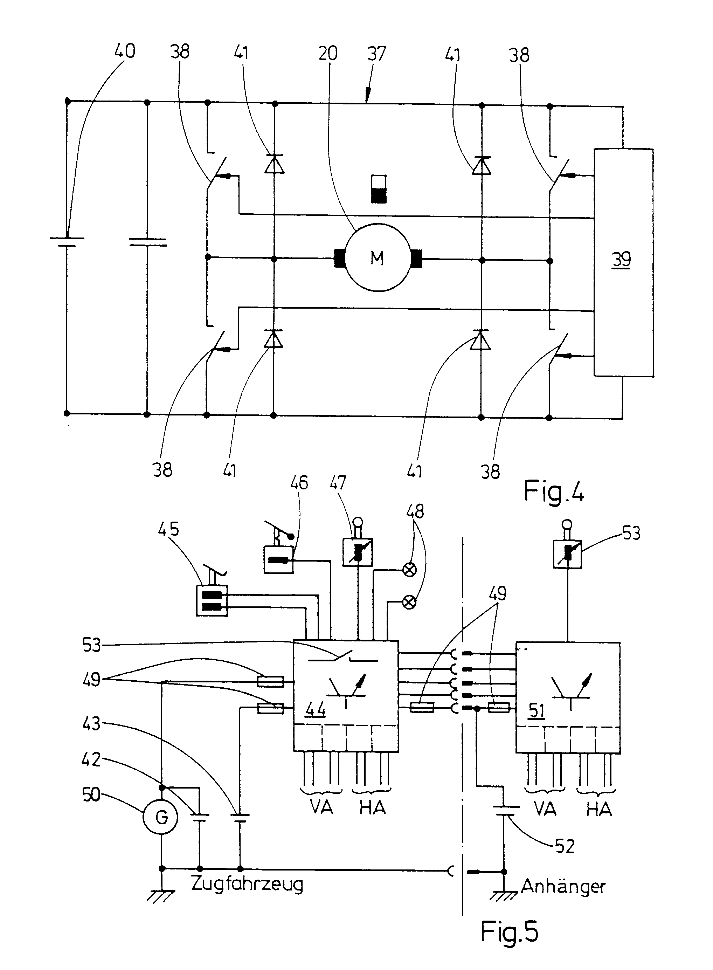

Wie aus Fig. 4 hervorgeht, erfolgt die Stromversorgung des permanentmagneterregten Gleichstrommotors 20 im 4 Quadrantenbetrieb über eine gesteuerte Halbleiterbrücke 37, die an eine Gleichstrombatterie 40 angeschlossen ist und in deren Brückenzweig der Gleichstrommotor 20 liegt. Die gesteuerten Halbleiter werden von Transistoren 38 gebildet, die in Fig. 4 nur schematisch dargestellt sind. Die Transistoren 38 werden von einem Gleichstromsteller 39 gesteuert, der ebenfalls an der Gleichstrombatterie 40 angeschlossen ist und seine Steuerbefehle aus einer Ansteuerungselektronik erhält. Die Dioden 41 sind Schutzdioden.

Fig. 5 zeigt einen Schaltplan einer Bremsanlage mit elektromotorisch zuspannbaren Radbremsen für ein Zugfahrzeug mit einem Anhänger. Die Bremsanlagen des Zugfahrzeugs und des Anhängers weisen je vier elektromotorisch zugespannte Bremsen auf, wie sie vorstehend beschrieben sind. Aus Sicherheitsgründen sind entsprechend den gesetzlichen Vorschriften Stromversorgung, Betriebsbremspedalgeber und Bereiche der Elektronik redundant ausgebildet, was auch eine zweite Stromquelle im Zugfahrzeug erfordert.

Eine Ansteuerungselektronik 44 wird außer von der Fahrzeughauptbatterie 42 noch von einer weiteren Zusatzbatterie 43 versorgt. Der Anhänger enthält ebenfalls eine Ansteuerungselektronik 51 und eine eigene Batterie 52, die neben der Sicherheitsfunktion auch noch zur Kompensation der Spannungsabfälle in Leitungen und Steckverbindungen dient. Im Normalfall kann die Fahrzeughauptbatterie 42 die gesamte Bremsanlage versorgen. Im Störungsfall - der sofort angezeigt wird - übernehmen die Batterien 43 und 52 die Stromversorgung gemeinsam oder im Grenzfall auch einzeln. Zur Sicherstellung eines ausreichenden Ladezustandes der Batterien 43 und 52 sind diese vorteilhaft über mit 53 angedeutete Relaisschaltkontakte an einem Fahrzeuggenerator 50 angeschlossen. Die Ansteuerung der Relaiskontakte 53 erfolgt über eine Spannungsschaltschwelle, die temperaturkompensiert über der Leerlaufspannung der Batterien 42,43,52 liegt. Als zusätzliche Sicherheit kann für das Ansteuern der Relaiskontakte auch noch die Spannung an der Klemme D+ des Fahrzeuggenerators 50 (Generator arbeitet) herangezogen werden.

An der Ansteuerungselektronik 44 des Zugfahrzeugs sind auch ein zweikreisiger Betriebsbremsgeber 45, ein Handbrems- oder Feststellbremsgeber 46 und ein Lastgeber 47 angeschlossen. Anzeigeleuchten 48 zeigen den Zustand des Bremssystems an und geben evtl. zusammen mit einer nicht dargestellten akustischen Einrichtung im Störungsfall Signal. Mit 49 sind Sicherungen bezeichnet.

Die Ansteuerungselektronik 51 des Anhängers ist über eine Steckverbindung mit der Ansteuerungselektronik (44) des Zugfahrzeugs verbunden, erhält von dieser die Befehle und meldet ggf. Störungen. Ein Lastgeber 53 bewirkt die richtige Zuordnung der Bremsleistung zum Beladungszustand im Anhänger. Die Ausgänge zu den Radbremsen an Vorderachse (VA) und Hinterachse (HA) werden elektronisch auf Unterbrechung und Kurzschluß überwacht, und es erfolgt im Schadensfall Anzeige und ggf. Abschaltung der fehlerhaften Radbremse.

In den elektronischen Schaltgeräten 44 und 51 sind Erweiterungen mit ABS-Funktionen und im Gerät 44 auch mit ASR-Funktionen möglich.

Die Erfindung ist nicht auf die beschriebenen Ausführungsbeispiele beschränkt. So kann die elektromotorische Zuspannung der Radbremse nicht nur bei einer Trommelbremse sondern auch bei einer Scheibenbremse eingesetzt werden. In diesem Fall ist die Bremstrommel durch eine Bremsscheibe ersetzt, an welche sich die Bremsbacken bei Bremsbetätigung axial anlegen. Anstelle einer Nockenzuspannung der Bremse kann deren Zuspannung auch durch einen von dem Gleichstrommotor 20 angetriebenen Keil oder Spreizhebel bewirkt werden. Die Ausbildung der Getriebestufen als Planetengetriebe ist nicht zwingend, hat sich aber wegen dessen Vorteile (große Übersetzungen mit geringer Planetenzahl, guter Wirkungsgrad, bekannte Technologie) als zweckmäßig erwiesen. Besonders vorteilhaft ist auch die Verwendung einer als Planetengetriebe ausgebildeten schaltbaren Getriebestufe zusammen mit einem Wolfrom-Getriebe, wie es in Antrieben der Flugsteuerung bei modernen amerikanischen Militärflugzeugen eingesetzt wird. Wolfrom-Getriebe sind reduzierte Planeten-Koppelgetriebe, die in bekannter Weise aus einem Antriebssonnenrad, Stufenplaneten, einem Festhohlrad, einem Antriebshohlrad und einem freien Steg bestehen.

Soll die elektromotorisch zugespannte Radbremse auch als Feststellbremse wirken, kann dies auf einfache Weise durch eine Getriebestufe mit Selbsthemmung, wie sie bei Schneckenradgetrieben gegeben ist, erreicht werden.

## Patentansprüche

1. Radbremse für Fahrzeuge, insbesondere für Kraftfahrzeuge, mit einer Bremsscheibe oder -trommel (10), mit mindestens einer mit dieser zur Erzeugung von Bremsreibung zusammenwirkenden Bremsbacke (11,12), die bei unbetätigter Bremse unter Belassung eines Luftspaltes (Lüftspiels) vor der Bremsscheibe oder -trommel (10) liegt und bei betätigter Bremse sich an diese mittels eines Bremsbelages (17, 18) anpreßt (Zuspannung), und mit einem in inversen Drehrichtungen betreibbaren Elektromotor (20), insbesondere Gleichstrommotor, zum Betätigen der Bremsbacke (11,12), dessen Abtriebswelle (21) über ein Getriebe (22) mit der Bremsbacke (11,12) in Verbindung steht, dadurch gekennzeichnet, daß das Getriebe (22) auf zwei unterschiedliche Untersetzungsverhältnisse umschaltbar ausgebildet ist und daß die Getriebeumschaltung selbsttätig beim Anlegen des Bremsbelags (17,18) an die Bremsscheibe oder -trommel (10) derart erfolgt, daß im Bereich des Lüftwegs der Bremsbacke (11,12) das kleinere Untersetzungsverhältnis und im Bereich des Spannwegs der Bremsbacke (11,12) das größere Untersetzungsverhältnis eingestellt ist.

2. Bremse nach Anspruch 1, dadurch gekennzeichnet, daß die Getriebeumschaltung in Abhängigkeit von der Drehzahl des Elektromotors (20) mechanisch oder elektromechanisch erfolgt.

3. Bremse nach Anspruch 2, dadurch gekennzeichnet, daß zur Getriebeumschaltung eine Fliehkraftkupplung (29') bzw. mindestens eine elektromechanische Kupplung (28,29), der ein aus dem Ankerstrom oder der Ankerspannung des Elektromotors (20) abgeleitetes, drehzahlabhängiges Einschaltsignal zugeführt wird, vorgesehen ist.

4. Bremse nach Anspruch 1, dadurch gekennzeichnet, daß die Getriebeumschaltung drehmomentabhängig mechanisch oder elektromechanisch erfolgt.

5. Bremse nach einem der Ansprüche 1 - 4, dadurch gekennzeichnet, daß das Getriebe (22) mehrstufig ausgebildet ist und zur Umschaltung des Untersetzungsverhältnisses eine Getriebestufe (24) vorzugsweise die dem Elektromotor (20) unmittelbar nachgeordnete Getriebestufe (24), überbrückbar ausgebildet ist.

6. Bremse nach Anspruch 5, dadurch gekennzeichnet, daß jede Getriebestufe (24-26) als Planetengetriebe mit Sonnenrad (30), Hohlrad (31) und auf einem gemeinsamen Steg (33) sitzenden Planetenrädern (32) ausgebildet ist, wobei die Hohlräder (31) der Getriebestufen (24-26) fixiert und die Stege (33) mit dem Sonnenrad (30) der jeweils nachfolgenden Getriebestufe (25,26) fest verbunden sind, und daß bei der überbrückbaren Getriebestufe (24) die Fixierung des Hohlrads (31) zu dessen Freilauf aufhebbar und eine starre Verbindung zwischen Hohlrad (31) und Steg (33) herstellbar ist.

7. Bremse nach Anspruch 6, dadurch gekennzeichnet, daß das Hohlrad (31) der überbrückbaren Getriebestufe (24) im Getriebegehäuse (27) in einer Drehrichtung freidrehend gelagert ist und daß zwischen dem Hohlrad (31) und dem Steg (33) oder dem Sonnenrad (30) einerseits und dem Steg (33) oder dem Hohlrad (31) andererseits eine Kupplung (29') angeordnet ist, die üblicherweise geschlossen ist und im Moment des Anlegens des Bremsbelages (17,18) an die Bremsscheibe oder -trommel (10), z.B. beim Erreichen eines vorgegebenen Drehmoments der Abtriebswelle (21) der Getriebestufe (24), geöffnet wird.

8. Bremse nach Anspruch 5, dadurch gekennzeichnet, daß zusätzlich zu der überbrückbaren Getriebestufe (24) ein Wolfrom-Getriebe verwendet wird.

9. Bremse nach Anspruch 5, dadurch gekennzeichnet, daß das Getriebe (22) eine Schneckenradstufe enthält.

10. Bremse nach einem der Ansprüche 1 - 9, dadurch gekennzeichnet, daß der Elektromotor als permanentmagneterregter Gleichstrommotor (20) ausgebildet ist, der im Brückenzweig einer im 4 Quadrantenbetrieb arbeitenden gesteuerten Schaltung (37) eingeschaltet ist.

11. Bremse nach einem der Ansprüche 1 - 10, dadurch gekennzeichnet, daß der Elektromotor ein Splitfeldmotor ist.

12. Bremsanlage mit vier Radbremsen nach einem der Ansprüche 1 - 11, dadurch gekennzeichnet, daß die Radbremsen von mindestens zwei Stromquellen (42,43) versorgt sind.

## Claims

1. Wheel brake for vehicles, in particular for motor vehicles, having a brake disc or drum (10), having at least one brake shoe (11, 12), which interacts with the said disc or drum to produce braking friction and, when the brake is not actuated, lies in front of the brake disc or drum (10), leaving an air gap (release clearance), and, when the brake is actuated, presses against the said disc or drum by means of a brake lining (17, 18) (application), and having an electric motor (20), in particular a d.c. motor, drivable in opposite directions of rotation, for actuating the brake shoe (11, 12), the output shaft (27) of which is connected to the brake shoe (11, 12) via a gear mechanism (22), characterised in that the gear mechanism (22) is designed in such a way that if can be switched over to two different reduction ratios, and in that the switching over of the gear mechanism fakes place automatically when the brake lining (17, 18) is applied to the brake disc or drum (10), such that the smaller reduction ratio is set in the range of the release travel of the brake shoe (11, 12) and the larger reduction ratio is set in the range of the clamping travel of the brake shoe (11, 12).

2. Brake according to Claim 1, characterised in that the gear mechanism is switched over mechanically or electromechanically as a function of the speed of the electric motor (20).

3. Brake according to Claim 2, characterised in that a centrifugal clutch (29′) or at least one electromechanical clutch (28, 29), which is supplied with a speed-dependent switch-on signal derived from the armature current or armature voltage of the electric motor (20), is provided for switching over the gear mechanism.

4. Brake according to Claim 1, characterised in that the gear mechanism is switched over mechanically or electromechanically as a function of the torque.

5. Brake according to one of Claims 1-4, characterised in that the gear mechanism (22) is of multistage design and, for the purpose of switching over the reduction ratio, one gear stage (24), preferably the gear stage (24) directly following the electric motor (20), is designed to be bridgeable.

6. Brake according to Claim 5, characterised in that each gear stage (24-26) is designed as a planetary gear mechanism with a sun gear (30), ring gear (31) and planet gears (32) seated on a common web (33), the ring gears (31) of the gear stages (24-26) being fixed and the webs (33) being rigidly connected to the sun gear (30) of the respectively following gear stage (25, 26), and in that, in the bridgeable gear stage (24), the fixing of the ring gear (31) can be released to allow if to free wheel and a rigid connection can be established between the ring gear (31) and the web (33).

7. Brake according to Claim 6, characterised in that the ring gear (31) of the bridgeable gear stage (24) is mounted in the gear box (27) in such a way that if rotates freely in one direction of rotation and in that arranged between the ring gear (31) and the web (33) or the sun gear (30), on the one hand, and the web (33) or the ring gear (31), on the other hand, is a clutch (29′) which is normally engaged and is opened at the instant of application of the brake lining (17, 18) to the brake disc or drum (10), e.g. when a predetermined torque of the output shaft (21) of gear stage (24) is reached.

8. Brake according to Claim 5, characterised in that a Wolfrom gear mechanism is used in addition to the bridgeable gear stage (24).

9. Brake according to Claim 5, characterised in that the gear mechanism (22) contains a worm wheel stage.

10. Brake according to one of Claims 1-9, characterised in that the electric motor is designed as a permanent-magnet excited d.c. motor (20) which is inserted in the bridge branch of a controlled circuit (37) operating on the 4-quadrant principle.

11. Brake according to one of Claims 1-10, characterised in that the electric motor is a split field motor.

12. Brake system with four wheel brakes according to one of Claims 1-11, characterized in that the wheel brakes are supplied by at least two current sources (42, 43).

## Revendications

1. Frein de roue pour véhicule notamment pour véhicule automobile comportant un disque ou un tambour de frein (10) avec au moins une mâchoire de frein (11, 12) coopérant avec cet élément pour créer le frottement servant au freinage, et qui se trouve lorsque le frein n'est pas actionné, à un certain intervalle d'air (jeu d'air) devant le disque ou tambour de frein (10), et lorsque le frein est actionné, la mâchoire se presse par serrage contre l'élément, avec sa garniture de frein (17, 18), ainsi qu'un moteur électrique (20) entraîné en sens inverse du sens de rotation, notamment moteur à courant continu pour actionner les mâchoires de frein (11, 12) dont l'axe de sortie (21) est relié par une transmission (22) aux mâchoires de frein (11, 12), frein caractérisé en ce que la transmission (22) peut commuter sur deux étages de démultiplication différents et en ce que la commutation de la transmission se fait automatiquement lorsque la garniture de frein (17, 18) s'applique contre le disque ou le tambour de frein (10), de façon que dans la zone de la course de l'intervalle d'air pour les mâchoires de frein (11, 12), on dispose du plus petit étage de démultiplication et que pour la zone correspondant à la course de serrage des mâchoires de frein (11, 12), on dispose du plus grand étage de démultiplication.

2. Frein selon la revendication 1, caractérisé en ce que la commutation de la transmission se fait de manière mécanique ou électromécanique en fonction de la vitesse de rotation du moteur électrique (20).

3. Frein selon la revendication 2, caractérisé en ce que pour commuter la transmission, il est prévu un embrayage centrifuge (29') ou au moins un embrayage électromécanique (28, 29) qui reçoit un signal de mise en oeuvre déduit du courant d'induit ou de la tension d'induit du moteur électrique (20) et dépendant de la vitesse de rotation.

4. Frein selon la revendication 1, caractérisé en ce que la commutation de la transmission se fait mécaniquement ou électromécaniquement en fonction de la vitesse de rotation.

5. Frein selon l'une des revendications 1 - 4, caractérisé en ce que la transmission (22) est à plusieurs étages et pour commuter les étages de démultiplication, il est prévu un étage de transmission (24) de préférence l'étage de transmission (24) en aval directement du moteur électrique (20) et que l'on peut contourner.

6. Frein selon la revendication 5, caractérisé en ce que chaque étage de transmission (24 - 26) est une transmission planétaire avec roue solaire (30), couronne (31) et des roues planétaires (32) montées sur un support commun (33), la couronne (31) des étages de transmission (24 - 26) étant fixe et le support (33) étant relié solidairement à la roue solaire (30) de chaque étage de transmission suivant (25, 26) et en ce que pour l'étage de transmission (24) susceptible d'être contourné, le blocage de la couronne (31) peut être supprimée pour lui permettre de fonctionner en roue libre et une liaison rigide peut être établie entre la couronne (31) et le support (33).

7. Frein selon la revendication 6, caractérisé en ce que la couronne (31) de la transmission (24) susceptible d'être contourné est montée libre en rotation dans un sens de rotation à l'intérieur du carter (27) et en ce que la couronne (31) et le support (33) ou entre la roue solaire (30) d'une part, et le support (33) ou la couronne (31) d'autre part, on a un embrayage (23') qui est normalement fermé et qui au moment du contact de la garniture de frein (17, 18) contre le disque ou le tambour de frein (10), s'ouvre, par exemple lorsqu'on atteint un couple prédéterminé sur l'axe de sortie (21) de la transmission (24).

8. Frein selon la revendication 5, caractérisé en ce qu'en plus de l'étage (24) susceptible d'être contourné, on utilise une transmission Wolfrom.

9. Frein selon la revendication 5, caractérisé en ce que la transmission (22) comporte un étage à roue à vis.

10. Frein selon l'une des revendications 1 - 9, caractérisé en ce que le moteur électrique est un moteur à courant continu (20) excité par aimant permanent et qui est monté dans une branche de pont d'un circuit de commande (37) fonctionnant dans quatre cadrans.

11. Frein selon l'une des revendications 1 à 10, caractérisé en ce que le moteur électrique est un moteur à champ divisé.

12. Installation de frein à quatre freins de roue selon l'une des revendications 1 à 11, caractérisée en ce que les freins de roue sont alimentés à partir d'au moins deux sources de courant électrique (42, 43).

Fig.1

Fig.3

Fig.2

Fig.4

Fig.5